# EUROPEAN PATENT SPECIFICATION

(11) **EP 3 986 758 B1**
(45) Date of publication and mention of the grant of the patent: **27.03.2024**
(21) Application number: 20744158.5
(22) Date of filing: 19.06.2020
(51) Int. Cl.: B60T 1/00, B60T 13/74, F16D 55/226, F16D 63/00, F16D 65/18

(54) **ELECTRIC PARKING BRAKE**
ELEKTRISCHE FESTESTELLBREMSE
FREIN DE STATIONNEMENT ÉLÉCTRIQUE

(30) Priority: 20.06.2019 NL 2023353
(43) Date of publication of application: 27.04.2022
(73) Proprietor: Robert Bosch GmbH, 70442 Stuttgart (DE); Hitachi Astemo Netherlands B.V., 5301 LX Zaltbommel (NL)
(72) Inventor: KURZ, Josef Maximilian, 83104 Ostermuenchen (DE); HAMMER, Uwe, 83059 Kolbermoor (DE); KARL, Armin, 85416 Langenbach (DE)
(74) Representative: V.O.
(86) International application number: PCT/NL2020/050398
(87) International publication number: WO 2020/256551

(56) References cited:
- EP-A1- 3 450 273
- DE-A1- 4 312 524
- US-A1- 2017 108 067
- US-A1- 2017 114 848

## Description

### TECHNICAL FIELD AND BACKGROUND

The present disclosure relates to an electric brake system; method of parking a vehicle using the brake system; and vehicle comprising the brake system, e.g. as part of a brake-by -wire system.

Brake-by-wire is typically used to denote a braking system in which the actuation and transmission devices are decoupled from each other. In a conventional hydraulic electric brake system, the brake pedal is the actuator and the hydraulic is the transmission device. Here, a distinction is made between the electrohydraulic brake, electro-pneumatic brake (in trucks) and the electromechanical brake. Only the omission of the hydraulic or pneumatic makes the brake a real, so-called "dry" brake-by-wire application, since no fluid technology systems are used here. One reason for wanting to use this technology may be the slowness of currently used media in an electric brake system. With the help of pure electromechanical solutions, shorter response times may be achieved, which may also be reflected in the achievable braking distances. Another advantage may be a more favorable manufacturability of the brake-by-wire technology, since components in use in hydraulic systems such as a master cylinder, brake booster and ABS are expensive to make, in comparison.

An electric parking brake (EPB, sometimes called APB - automatic parking brake) can replace the mechanical parking brake in the automotive industry and may also be referred to as an electric hand brake. The electric parking brake represents another step in the implementation of a fully electric braking system. With its help, it becomes possible to realize additional comfort functions, such as assisted starting on a slope. This function can also be enabled by other driver assistance systems.

As background, US 8,118,149 B2 describes a selective freewheeling mechanism and electromechanical vehicle brake having a selective freewheeling mechanism for expanding an electromechanical vehicle brake into a parking brake.

A freewheel, or freewheeling mechanism, typically has a shaft and an outer ring. Between the shaft and the outer ring, there are locking elements, which allow a rotation of the shaft relative to the outer ring in one direction, the so-called freewheeling direction, and lock against a rotation of the shaft relative to the outer ring in the opposite direction, the so-called locking direction. In a selective freewheeling mechanism, the locking elements can be put in a disengagement position, in which they are out of action, or in other words do not lock against a rotation of the shaft relative to the outer ring in any direction. In the disengagement position, the shaft is rotatable in both directions relative to the outer ring. In an engagement position, a selective freewheeling mechanism has the usual function of a freewheeling mechanism; that is, the shaft is rotatable relative to the outer ring in the freewheeling direction and is locked against rotation in the opposite locking direction.

An electromechanical vehicle brake typically has an electromechanical actuation device, with which a friction brake lining can be pressed for braking against a brake body that is fixed against relative rotation to a vehicle wheel. The brake body is typically a brake disk or a brake drum. The actuation device typically has an electric motor and a rotation-to-translation conversion gear that converts a rotary driving motion of the electric motor into a translational motion for pressing the friction brake lining against the brake body. Worm gears, such as spindle gears or roller worm drives, are often used as rotation-to-translation conversion gears. It is also possible to convert the rotary motion into a translational motion by means of a pivotable cam, for instance. A step-down gear, for instance in the form of a planetary gear, is often placed between the electric motor and the rotation-to-translation conversion gear. Self-boosting electromechanical vehicle brakes have a self booster that converts a frictional force, exerted by the rotating brake body against the friction brake lining that is pressed for braking against the brake body, into a contact pressure, which presses the friction brake lining against the brake body in addition to a contact pressure that is exerted by the actuation device. Wedge, ramp, and lever mechanisms can be used for the self boosting.

The mechanism described in the aforementioned US 8,118,149 B2 comprises an outer ring, a locking element cage disposed in the outer ring, a shaft disposed in the locking element cage; and a plurality of locking elements disposed between the shaft and the outer ring. The locking element cage and the outer ring are embodied as a rotor and stator of an electric motor having at least one coil arranged such that, when current is applied to the coil, the locking element cage and the outer ring are pivoted relative to one another about said rotation axis into the engagement or disengagement position. When the coil is switched off, the previously elastically rotated spring element exerts a restoring torque on the locking element cage in the freewheeling direction, which reinforces the disengagement of the freewheeling mechanism. Moreover, face ends, facing one another, of the locking element cage and of the restoring element have complementary sawtooth-like teeth, whose direction is selected such that they likewise exert a restoring torque in the freewheeling direction and thus in the disengagement direction of the freewheeling mechanism, when the locking element cage is pulled by the spring element against the restoring element.

US 2017/108067 A1 describes an electric brake device with a parking brake mechanism is configured to be able to switch between: a parking lock state in which a reduction of a braking force of the electric actuator is inhibited; and an unlock state in which the reduction of the braking force is allowed. The parking brake mechanism includes a lock member and an actuator that drives switching of the lock member.

There remains a desire to enable an intrinsically safe integration of a parking brake function in the mechanics of an electromechanical "dry" service brake which prevents failure of the parking brake, e.g. in case electric power is turned off and/or the brake motor fails.

### SUMMARY

According to one aspect of the invention an electric brake system is provided for braking a vehicle. The system comprises a central transmission gear configured to rotate around an axis to transmit mechanical energy between an electric brake motor and a brake actuation mechanism. Activation or deactivation of the vehicle brake may be accompanied by rotation of the central transmission gear in a brake activating or deactivating direction, respectively. Preferably, a first engagement member is mechanically fixed to, or integral with, the central transmission gear to rotate with the central transmission gear around the axis. A second engagement member can be configured to selectively engage or disengage the first engagement member, e.g. depending on a position of the second engagement member along the axis. For example, a parking brake actuator is configured to move the second engagement member along the axis for switching the position of the second engagement member between a service brake position and a parking brake position. In the service brake position the first and second engagement members are mechanically disengaged. For example, the central transmission gear is free to rotate independent of the second engagement member for freely transmitting the mechanical energy between the electric brake motor and the brake actuation mechanism. In the parking brake position the first and second engagement members are mechanically engaged to prevent the central transmission gear from rotating in the brake deactivating direction while allowing rotation of the transmission gear in the brake activating direction.

Advantageously, a separate electric parking brake is not necessary which can have positive effects on overall costs of the vehicle electric brake system. The system described herein can be self-locking to keeps its position engaged / disengaged without permanent energy consumption. This may enable an intrinsically safe integration of a parking brake function in the mechanics of an electromechanical "dry" brake. A separate parking brake can be eliminated by using the existing electric brake system to reduce cost and gain space. The system can be relatively compact, using standard parts and can be re-adjustable. The system may be closed normally, or kept open, while only needing to be energized for latching between the positions. The brake system can be stable in a first condition for parking brake purposes and stable in a second condition for service braking (the car running).

According to the claimed invention, the brake system is designed such that, in the parking brake position, the central transmission gear is allowed to rotate in the brake activating direction. By still allowing rotation in the brake activating direction when the second engagement member is in the parking brake position, the brake mechanism can be actuated also after switching to the parking brake position..

In some embodiments, the mechanical engagement between the first and second engagement members is configured to allow the central transmission gear to exclusively rotate in the brake activating direction when the second engagement member is in the parking brake position. For example, the first engagement member and second engagement member each comprise a set of teeth, wherein the sets of teeth are shaped to be mutually interlocking to prevent the central transmission gear from rotating at least in the brake deactivating direction. In one embodiment, at least some of the teeth comprise a respective slope on one side, wherein the slope of the teeth partially faces a respective opposite engagement member to cause the second engagement member to be pushed away by the slope from the first engagement member when the central transmission gear is rotated in the brake activating direction. In another or further embodiment, the first engagement member is connected to a resilient mechanism. For example, the resilient mechanism is configured to push or pull the first engagement member back towards the second engagement member after initially being pushed apart by the slope of the teeth. Most preferably, the shapes of the interlocking teeth on an opposite side of the slope are configured keep the first and second engagement members together when the central transmission gear experiences a force to rotate in the brake deactivating direction while the second engagement member is in the parking brake position.

In some embodiments, the first and second engagement members form or function like a freewheel or ratchet mechanism which is active at least when the second engagement member is in the parking brake position to prevent the central transmission gear from rotating in the brake deactivating direction while allowing the central transmission gear to rotate in the brake activating direction. One benefit may be that enacting the parking brake can always provide satisfactory tightening of the brake pads of the service brake. For example, in the mechanism the first and second engagement members may interlock when the central gear moves in one direction, namely a direction in which the service brake is activated, and are prevented from interlocking when the central gear moves in another direction, namely a direction in which the service brake is deactivated.

Preferably, the freewheel or ratchet mechanism is inactive when the second engagement member is disposed in the parking brake position (P). A benefit is that this increases the longevity of the first and second engagement members as unnecessary friction between components is prevented. In some embodiments, the freewheel mechanism is at least partially activated or deactivated dependent on a position of the second engagement member. For example, a freewheel mechanism such as a ratchet may be formed by engagement of the first and second engagement members. In other or further embodiments, at least part of the freewheel mechanism may be always activate, e.g. allowing rotation of the second engagement member exclusively in the brake activating direction, irrespective of its position. For example, the second engagement member (11) can be rotatably connected to an axle via a freewheel mechanism. Also combinations are possible.

In a preferred embodiment, the first engagement member and second engagement member each comprise a set of teeth, wherein these sets of teeth are designed to be mutually interlocking, wherein each set of teeth at least partially comprises a saw tooth profile, and wherein the saw tooth profiles are opposite in phase, and wherein the profiles at least partly determine a function of the freewheel mechanism. A benefit to this is that engagement means are able use the rotational movement of the central gear in one direction only to induce the temporary separation of the first and second engagement members without any additional gear components. In other or further embodiments, the slope of the teeth partially faces a respective opposite engagement member to cause the second engagement member to be pushed away by the slope from the first engagement member when the central transmission gear is rotated in the brake activating direction. Preferably, the respective teeth on both engagement members are sloped facing each other. Preferably the at least first tooth comprises a set of first teeth, and the at least second tooth comprises a set of second teeth. The slope is preferably between 35 - 55 degrees with respect to the plane of rotation (normal to the axis of rotation).

In some embodiments, the system comprises a resilient mechanism, such as a spring, wherein the first engagement member is connected to the resilient mechanism. The resilient mechanism is configured to push or pull the first engagement member back towards the second engagement member after initially being pushed apart by the slope of the teeth. This allows the second engagement member to automatically reassume the parking brake position, such that any parking brake deactivating rotation can be prevented without delay. Optionally, the shapes of the interlocking teeth on an opposite side of the slope are configured keep the first and second engagement members. For example, the teeth have a straight edge on an opposite side of the slope, which does not cause any force pushing the engagement members apart when the central transmission gear tends to rotate in the brake deactivating direction. Advantageously, the resilient mechanism may further stabilize the connection in the brake deactivating direction by pushing the engagement members together.

Preferably, the electric brake system is configured to stably maintain a position of the second engagement member in at least the parking brake position (P) absent electrical power to the electric brake system. A benefit is that parking braking remains available even in the event of a short circuit or a drained car battery making the parking system safer. In some embodiments, the system has an anchor mechanism, e.g. part of the parking brake actuator, which may help to further stabilize the position of the second engagement member in the parking brake position. In some embodiments, a combined mechanism of the parking brake actuator and the second engagement member is bi-stable maintaining a position of the second engagement member in either the parking brake position (P) or the service brake position (S) absent electrical power to the electric brake system. A benefit of bi-stability is that a parking brake operation is prevented from occurring unintentionally, such as after power loss.

In some embodiments, the second engagement member is arranged as a sleeve on a central axle extending along the axis. The second engagement member is configured to slide along the central axle between the service brake position and the parking brake position. The system preferably comprises a frame to which the central axle is immovably fixed A benefit is that no additional guiding element are necessary for guiding the second engagement member in between positions. This allows the system to be more compact.

In one embodiment, the sleeve shaped second engagement member comprises inner teething on an inside of the sleeve shape and the central axle comprises outer teething to engage the inner teething of the second engagement member. For example, the teething extends in a direction along the axis to allow the second engagement member to slide along the central axle while preventing rotation of the second engagement member with respect to the central axle. A benefit of this feature is that the second engagement member becomes double inter-locked when in the parking brake position. This allows a rotational force exerted by the braking mechanism during parking braking to be distributed evenly across around the axle, instead of on a single ratchet point.

In some embodiments, a gearbox connects the electric brake motor with the brake piston. One of the gears has an axial teething. An actuator pushes the sliding sleeve axial into this axial teething and locks the gear wheel. A spring pushes the sliding sleeve back into its initial position. The tooth crown of gear and sliding sleeve have chamfers at so that the teeth will always engage in closing direction. The freewheel inside the sliding sleeve allows rotation in open direction but not in closing direction of the parking brake. To lock the system the motor has to close the service brake. Then the actor pushes the sliding sleeve into the gear. Once the axial teething is locked the freewheel blocks the rotation of gear in open direction. The pre-stress of the service brake and the friction between the teeth keeps the piston in closed position. No energy consumption is necessary. To open the system the motor has to compensate the pre-stress of the system and rotate the gear in closing direction until the friction between the teeth of sliding sleeve and gear is low enough so that the spring pushes back the sleeve again. The freewheel allows to readjust the parking brake in closing direction but not in open direction.

Alternatively, or additionally to the inner teething, the second engagement member may be fixed to the central axle e.g. via a freewheel mechanism there between, or directly fixed when the freewheel mechanism is formed between the engagement members. Instead of sliding the second engagement member along the central axle, it can also be envisaged to move the central axle with the second engagement member fixed thereon relative to the first engagement member, optionally with the freewheel mechanism there between. In essence this allows the hub to move relative to the axle in one direction to allow the teeth to be oriented with the teeth of the first engagement member when they meet. This at least partially prevents the teeth from scraping.

Other or further aspects may be embodied as a method of parking a vehicle, e.g. activating or deactivating a parking brake using the brake system as described herein. In some embodiments, the method comprises energizing the electric brake motor to mechanically actuate the brake actuation mechanism via a set of gears including the central transmission gear. This may be done before and/or during energizing the parking brake actuator to set the second engagement member in the parking brake position. As will be appreciated energizing the electric brake motor and parking brake actuator can be discontinued while the second engagement member remains in the parking brake position by its mechanical engagement with the first engagement member to prevent the central transmission gear from rotating at least in the brake deactivating direction.

### BRIEF DESCRIPTION OF DRAWINGS

FIGs 1A and 1B illustrate a perspective view of the brake system;
FIG 2 illustrates the brake system placed over a brake disc of the wheel of a vehicle;
FIG 3 illustrates an exploded view of then brake system;
FIG 4 illustrates a perspective view of components providing parking brake functionality in the brake system;
FIG 5 illustrates a cross-sectional view of the system of FIG 4;
FIG 6 illustrates a cross-sectional view of an alternative system .

These and other features, aspects, and advantages of the apparatus, systems and methods of the present disclosure will become better understood from the following detailed description, appended claims, and accompanying drawings.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

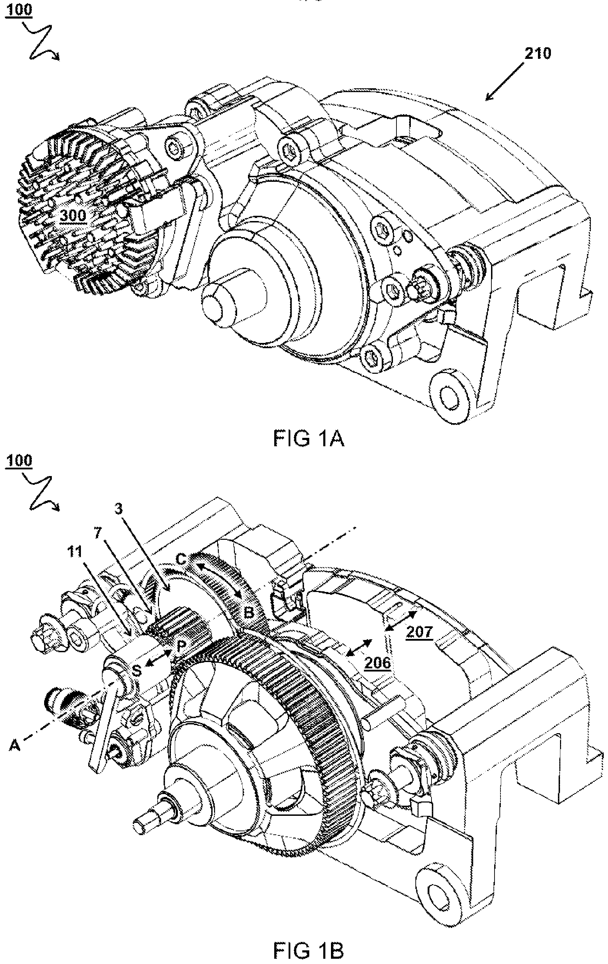

FIG 1A illustrate a perspective view of a brake system 100 comprised in a housing 210 and coupled to an electric brake motor 300. FIG 1B illustrate a view of the brake system without the housing and motor. As shown, a central transmission gear 3 may be disposed between different gears forming a mechanical path between the electric brake motor 300 and the brake mechanism, e.g. ultimately resulting in a movement of the brake pads 206, 207 around the brake disc (not shown here).

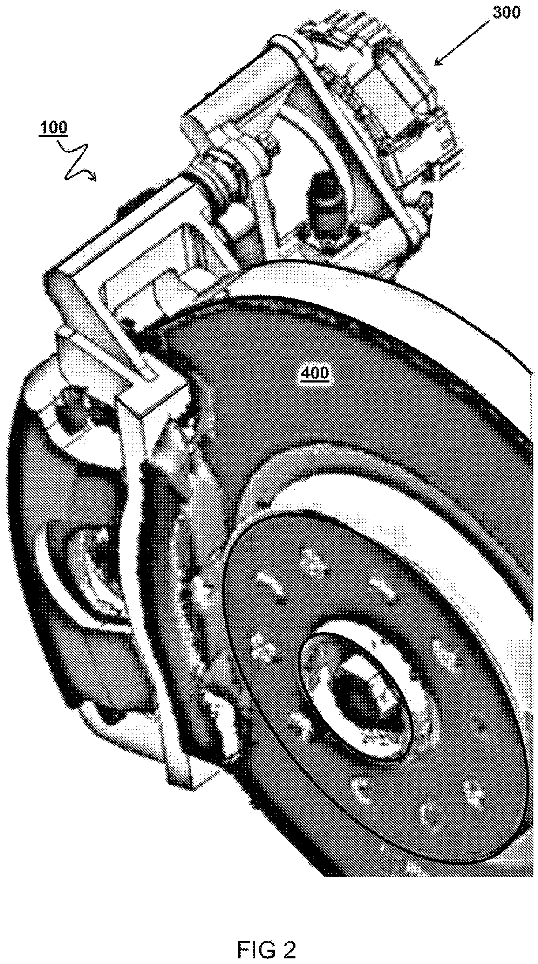

FIG 2 illustrates an embodiment wherein the electric brake system 100 is placed over a brake disc 400 connected the wheel of a vehicle.

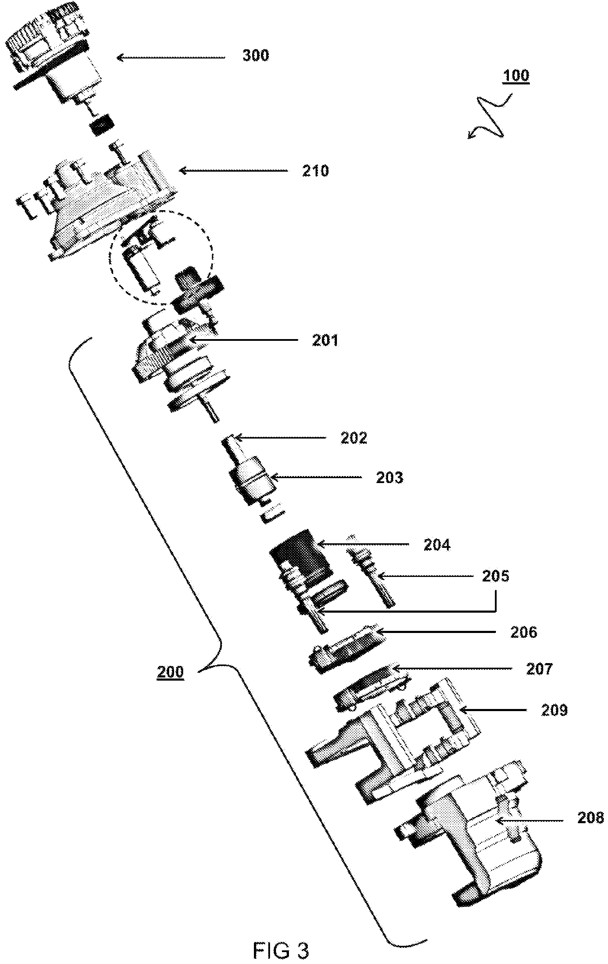

FIG 3 illustrates an exploded view of then brake system 100. In some embodiments, e.g. as shown, the brake system 100 comprises or couples to an electric brake motor 300 which transmits mechanical energy to a brake mechanism 200 via a central transmission gear 3. In the embodiment shown, the brake mechanism comprises a piston-type brake mechanism, but other braking mechanism may also be used. Typically, the electric brake system 100 can have multiple gears which are operationally connected to the central transmission gear 3. In the embodiment shown, the gear 201 is arranged to drive a spindle 202 which is housed in a spindle nut 203 to move a piston 204. The piston 204 in turn is guided by guide pins 205 to drive the opening and closing movements of a caliper 208. The caliper is fitted with two opposing brake pads 206, 207. The mechanical energy which is transmitted via the central transmission gear 3 to the brake mechanism 200 is thus ultimately used to drive the two braking pads 206, 207 closer to each other to perform or activate a braking operation, and apart from each other to cease of deactivate a braking operation. The caliper 208 is fixed to a bracket 209 by which the caliper 208 can be suspended over a brake disk of a wheel such that the brake wheel is provided between the pads 206, 207. In some embodiments, e.g. as shown, the electric servomotor 300 is coupled via the central transmission gear 3 (and other gears, e.g. gear 201) with the piston 204 of the service brake 200. In a preferred embodiment, the central transmission gear 3 is an intermediate gear that has axially extending teeth which will be described more in depth below, which engages in the teeth of the axially displaceable second engagement member 11 which is provided in the form of a sliding sleeve.

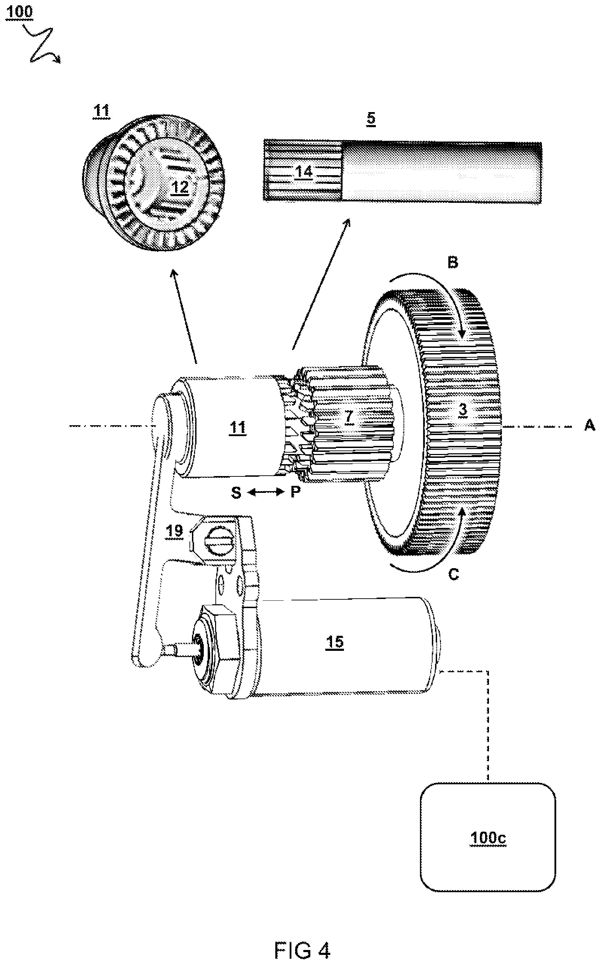

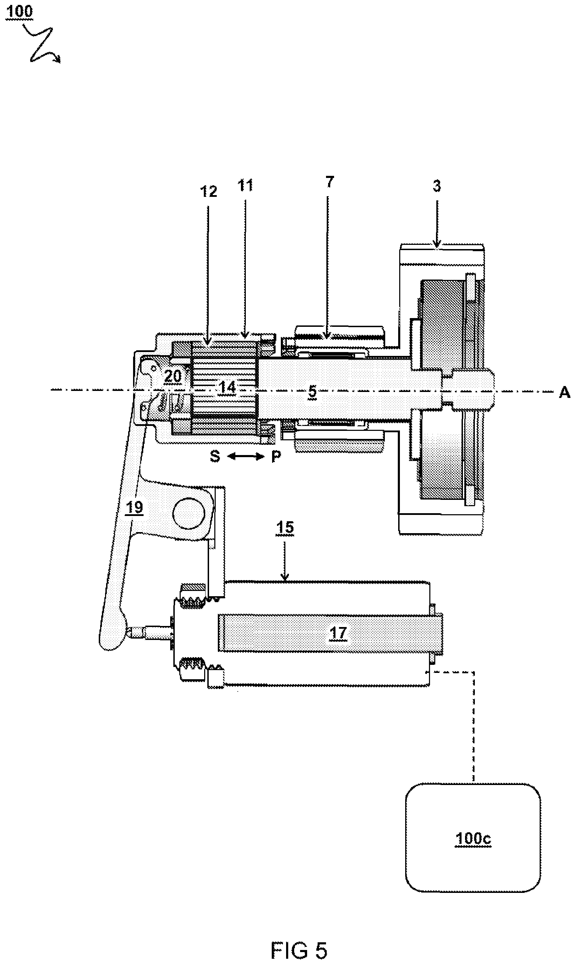

FIG 4 illustrates a perspective view of components providing parking brake functionality in the brake system 100; FIG 5 illustrates a cross-sectional view of the system of FIG 4.

In some embodiments, the central transmission gear 3 is part of an electric brake system 100 for parking braking a vehicle, such as a car or truck. In some embodiments, the electric brake system 100 may be controlled by a control system 100c configured to perform operational acts in accordance with the present methods and system. One method of control may include energizing the electric brake motor to mechanically actuate the brake actuation mechanism 200 via a set of gears including the central transmission gear 3 before and/or during energizing the parking brake actuator 15 to set the second engagement member 11 in the parking brake position P, or release the second engagement member 11 from the parking brake position P to the service brake position S. As will be appreciated, energizing of the electric brake motor 300 and parking brake actuator 15 can be discontinued after switching position. For example, the second engagement member 11 can remains in the parking brake position P by its mechanical engagement with the first engagement member 7 and/or optional anchor mechanism to prevent the central transmission gear 3 from rotating at least in the brake deactivating direction.

In some embodiments, the central transmission gear 3 is mounted in a freely rotatable manner onto an axle 5 which defines an axis A in order to transmit mechanical energy between the electric brake motor 300 and a brake actuation mechanism 200 to activate or deactivate braking of a vehicle by rotating the central transmission gear 3 in a brake activating direction B or brake deactivating direction C, respectively. Mechanical fixed to the central transmission gear is a first engagement member 7. This first engagement member 7 is fixed such that it rotates with the central transmission gear 3 around the central axis A. Alternatively, the engagement member may be provided as integral with the central transmission gear 3. A second engagement member 11 is also part of the electric brake system and is provided as a sleeve, in particular a capped sleeve, which can slide over the axle to selectively engage or disengage the first engagement member 7. In particular the first and second engagement member each comprise a set of teeth which are mutually interlocking. The set of teeth of each engagement member extends away from said engagement member towards the other engagement member in a direction parallel to the axis A. A motion of the second engagement member 11 causing the interlocking of the teeth and thus the engagement of both engagement members is parallel to the axis. The system 100 also has a parking brake actuator 15 which drives the movement of the second engagement member 11 via a lever 19. The actuator 15 drives the second engagement member along the axis A for switching the position of the second engagement member 11 between a service brake position (S) and a parking brake position (P).

In the figures illustrated here, the second engagement member 11 has assumed a service brake position S. In this service brake position S the first and second member 7, 11 are mechanically disengaged, and the central transmission gear 3 is free to rotate independent of the second engagement member 11 for freely transmitting mechanical energy between the electric brake motor 300 and brake mechanism 200.

The second engagement member 11 may also assume the parking brake position P. For example, this can be the position when the first and second engagement members 7, 11 are mechanically engaged (brought together). In one embodiment, e.g. as shown, the second engagement member has inner teething 12 on an inside of the sleeve. The central axle 5 has outer teething 14 to engage the inner teething 12 of the second engagement member 11. These teething 12, 14 extends in a direction along the axis A to allow the second engagement member 11 to slide along the central axle 5 while preventing rotation of the second engagement member 11 with respect to the central axle 5. In the parking brake position (P) the central transmission gear 3 will through its mechanical engagement with the second engagement member 11 be prevented from rotating around the axis A at all. The central gear and the engagement members are in this example made of a stainless steel, but may also be made of other metals and alloys commensurate with durable braking.

In some embodiments, e.g. as shown, the sleeve, or second engagement member 11 can be double-interlocked, inside to the axle and outside to the central transmission gear 3. The axle is equipped with external teeth, which engage the internal teeth of the sliding sleeve. The sliding sleeve is pressed with the actuator 15 in the direction of the first engagement member 7, in this example formed as a spur gear, wherein the chamfers of the axial teeth are carried out on one side, so that the sliding sleeve is rotated when the chamfers meet in the same direction. The teething between the axle and sliding sleeve is provided with a game that is designed so that the sliding sleeve can rotate so far that can always engage in the axial teething of the spur gear. A torsion spring, clamps the sliding sleeve counter to the rotational movement when threading with the axle. After the sliding sleeve engages in the spur gear, the brake motor can be switched off, thus releasing the brake corresponding to the backlash. This corresponds to an opening movement of the brake piston by about 0.015mm. Due to the bracing of the axial teething, the sliding sleeve is secured against axial displacement, so that the actuator can move back again. Advantageously, the actuator does not need to be permanently energized either when the parking brake is open or closed.

In some embodiments, the first and second engagement members 7, 11 form or function like a (selective) freewheel or ratchet mechanism which allows the central transmission gear to only rotate in a preferred direction, which is the brake activating direction B. In some embodiments, a resilient member 20, e.g. spring, is provided between the second engagement member 11 and the axle 5. When the second engagement member is in the parking brake position P the lever 19 of the actuator presses down on the end cap of the sleeve forcing the second engagement member to engage with the first engagement member 7. In the parking brake position P, the resilient member allows the second engagement member to be temporarily moved under a force parallel to the axis A towards the lever.

In some embodiments, interlocking sets of teeth of the first and second engagement members have at least partially a saw-tooth profile of opposite phase. When the second engagement member is in the parking brake position P and the central transmission gear 3 rotates in the brake activating direction B the slopes of the sets of teeth meet to exert a force on the second engagement member in a direction parallel to the axis A. The first and second engagement members temporarily move apart lasting only the duration of the rotation of the central transmission gear in the brake activating direction. When the central transmission gear 3 rotates in the brake deactivating direction and the second engagement member is in the parking brake position P, the sets of teeth meet with the non-sloped part of the saw-tooth profile preventing the exertion of a force on the second engagement member in a direction parallel to the axis A. The non-sloped part is a straight edge on an opposite side of the slope. Thus preventing the central transmission gear 3 from rotating in the brake deactivating direction C. Advantageously, the resilient mechanism may further stabilize the connection between the first and second engagement members, when the second engagement member is in the brake deactivating direction by pushing the engagement members together. The freewheel mechanism can thus be understood to only be active when the second engagement member is in the parking brake position P, because when the second engagement member is in the service brake position S, the first and second engagement members are fully disengaged, and therefor cannot enforce a preferred direction of rotation on the central transmission gear 3.

In some embodiments, e.g. as shown, the parking brake actuator 15 is a linear actuator driving a piston rod to move the lever 19. The parking brake actuator is in this example an electric linear actuator and can be optionally provided with an anchor 17. In some embodiments, the anchor allows to physically lock the actuator in a position which corresponds with the second engagement member 11 being in the parking brake position P. In this example the anchor is also able to physically lock the actuator in another position which corresponds with the second engagement member 11 being in the service brake position S. The parking brake actuator is thus designed such that a combined mechanism of the parking brake actuator and the second engagement member 11 is bi-stable maintaining a position of the second engagement member 11 in either the parking brake position P or the service brake position S absent electrical power to the electric brake system.

In some embodiments, a vehicle is provided comprising one, two, three, or four more brake systems 100 as described herein, e.g. one brake system per respective wheel of the vehicle. For example, the vehicle may be a car, a truck, motorcycle, or even an airplane. In some embodiments, the vehicle may use the brake system 100 as parking brake by the following steps of: operating the actuator 15 to move the second engagement member into the parking brake position (P), and operating the electrical brake motor 300 to drive the brake mechanism such that the brake pads tighten around the corresponding brake wheel of the vehicle. The method may include anchoring the parking brake actuator 15 such that the second engagement member remains in the parking brake position (P) in an electrically passive manner. Alternatively, the interlocking of the engagement members may maintain the braking position. In some embodiments, the parking brake actuator 15 may be operated and anchored via an electrical parking brake controller inside of a cabin of the vehicle in what is known as a dry brake-by-wire setup. An example of a parking brake controller is a touch screen or an electrical hand brake. In some embodiments, the parking brake may also engage automatically when the vehicle stops and/or the engine is shut down. In other or further embodiments, the vehicle may use the brake system 100 as a service brake by following the steps of: operating the electric brake motor 300 to move the second engagement member into the service brake position (S), and operating the electrical brake motor 300 to drive the brake mechanism such that the brake pads tighten around the corresponding brake wheel of the vehicle.

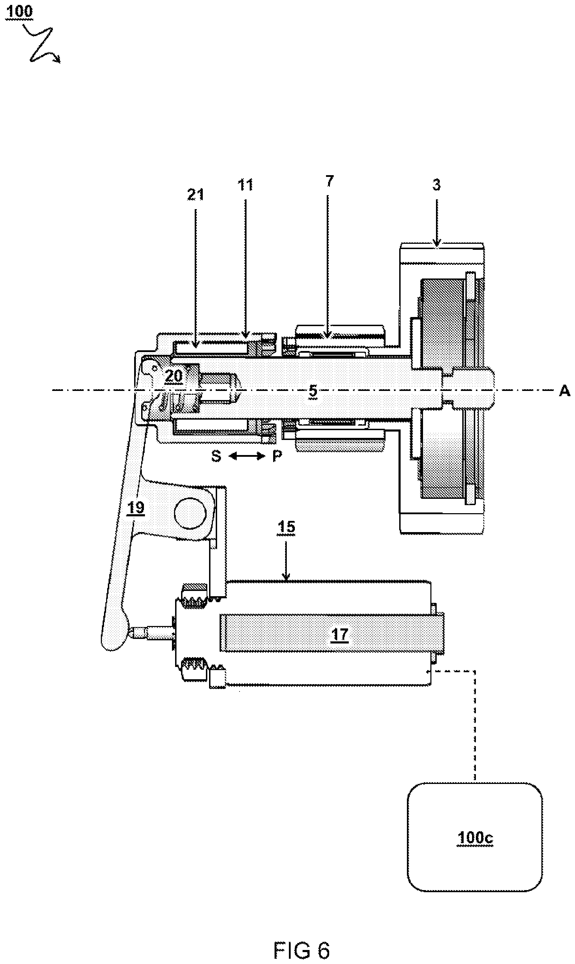

FIG 6 illustrates a cross-sectional view of an alternative embodiment. In some embodiments, e.g. as shown, the second engagement member 11 is fixed to the central axle via a freewheel mechanism 21 there between preventing the rotation of the second engagement member 11 and the therewith engaged central transmission gear 3 only in the brake deactivating direction C. In the alternative embodiment a spur gear (not shown, but conventional) is mounted on the axle 5 fixedly connected to a housing 210, wherein the second engagement member 11, or sliding sleeve, is mounted on the axle 5 via a freewheel 21. In use, the sliding sleeve is pressed with an actuator 15 in the direction of the intermediate wheel, also known as the central transmission gear 3. Chamfers of the axial teeth are designed on one side, either on the inner teething 12 or the outer teething 14, so that the sliding sleeve is rotated in the same direction opposite to the locking direction of the freewheel when the chamfers meet. After the sliding sleeve engages in the first engagement member 7, formed as a spur gear, the brake motor can be switched off. In this was, a torque acting in the reverse direction of the freewheeling torque is exerted on the sliding sleeve. The freewheel is braced and the brake held. Due to the bracing of the freewheel the sliding sleeve is secured against axial displacement, so that the actuator can go back again. Also here the actuator does not need to be permanently energized either when the parking brake is open or closed. The brake can be readjusted electrically when the parking brake is closed, e.g. in case of cooling the brake disc.

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

### LIST OF REFERENCE SIGNS

axis (A), brake activating direction (B), brake deactivating direction (C), service brake position (S), parking brake position (P), parking brake mechanism (10), central transmission gear (3), central axle (5), first engagement member (7), second engagement member (11), inner teething (12), outer teething (14), parking brake actuator (15), anchor (17), lever (19), resilient member (20), electric brake system (100) , parking brake controller (100c), brake actuation mechanism (200), spindle (202) , spindle nut (203), piston (204), guide pins (205), brake pads (206, 207), caliper (208), bracket (209), housing (210), electric brake motor (300), brake disk (400).

## Claims

1. An electric brake system (100) for braking a vehicle, the system (100) comprising
- a central transmission gear (3) configured to rotate around an axis (A) to transmit mechanical energy between an electric brake motor (300) and a brake actuation mechanism (200) to activate or deactivate braking of the vehicle by rotating the central transmission gear (3) in a brake activating direction (B) or brake deactivating direction (C), respectively;
- a first engagement member (7) mechanically fixed to, or integral with, the central transmission gear (3) to rotate with the central transmission gear (3) around the axis (A);
- a second engagement member (11) configured to selectively engage or disengage the first engagement member (7) depending on a position of the second engagement member (11) along the axis (A);
- a parking brake actuator (15) configured to move the second engagement member (11) along the axis (A) for switching the position of the second engagement member (11) between a service brake position (S) and a parking brake position (P), wherein
o in the service brake position (S) the first and second engagement members (7, 11) are mechanically disengaged, and the central transmission gear (3) is free to rotate independent of the second engagement member (11) for freely transmitting the mechanical energy between the electric brake motor (300) and the brake actuation mechanism (200); and **characterized in that**
o in the parking brake position (P) the first and second engagement members (7, 11) are mechanically engaged to prevent the central transmission gear (3) from rotating in the brake deactivating direction while allowing rotation of the transmission gear (3) in the brake activating direction.

2. The system according to claim 1, wherein the mechanical engagement between the first and second engagement members (7, 11) is configured to allow the central transmission gear (3) to exclusively rotate in the brake activating direction when the second engagement member (11) is in the parking brake position (P).

3. The system according to any of the preceding claims, wherein the first engagement member and second engagement member each comprise a set of teeth, wherein the sets of teeth are shaped to be mutually interlocking to prevent the central transmission gear (3) from rotating at least in the brake deactivating direction (C).

4. The system according to claim 3, wherein at least some of the teeth comprise a respective slope on one side, wherein the slope of the teeth partially faces a respective opposite engagement member to cause the second engagement member (11) to be pushed away by the slope from the first engagement member (7) when the central transmission gear (3) is rotated in the brake activating direction (B).

5. The system according to claim 4, comprising a resilient mechanism, wherein the first engagement member (7) is connected to the resilient mechanism, wherein the resilient mechanism is configured to push or pull the first engagement member (7) back towards the second engagement member (11) after initially being pushed apart by the slope of the teeth.

6. The system according to any of claims 3-5, wherein, the shapes of the interlocking teeth on an opposite side of the slope are configured keep the first and second engagement members (7, 11) together when the central transmission gear (3) experiences a force to rotate in the brake deactivating direction while the second engagement member (11) is in the parking brake position (P).

7. The system according to any of the preceding claims, wherein the electric brake system (100) is configured to stably maintain a position of the second engagement member (11) in at least the parking brake position (P) absent electrical power to the electric brake system by the mechanical engagement of the first and second engagement members (7,11).

8. The system according to any of the preceding claims, wherein a combined mechanism of the parking brake actuator (15) and the second engagement member (11) is bi-stable, maintaining a position of the second engagement member (11) in either the parking brake position (P) or the service brake position (S) absent electrical power to the electric brake system.

9. The system according to any of the preceding claims, wherein the second engagement member (11) is arranged as a sleeve on a central axle (5) extending along the axis (A), wherein the second engagement member (11) is configured to slide along the central axle (5) between the service brake position (S) and the parking brake position (P).

10. The system according to claim 9, wherein the sleeve shaped second engagement member (11) comprises inner teething (12) on an inside of the sleeve shape and the central axle (5) comprises outer teething (14) to engage the inner teething of the second engagement member (11), wherein the teething extends in a direction along the axis (A) to allow the second engagement member (11) to slide along the central axle (5) while preventing rotation of the second engagement member (11) with respect to the central axle (5).

11. The system (100) according to any of the preceding claims comprising an integrated brake mechanism (200) and electric brake motor (300), wherein the brake motor (300) is arranged to actuate the brake mechanism via the central transmission gear (3) of the parking brake system (100).

12. A method of parking a vehicle using the electric brake system (100) according to any of the preceding claims, the method comprising
- energizing the electric brake motor (300) to mechanically actuate the brake actuation mechanism (200) via a set of gears including the central transmission gear (3) before and/or during energizing the parking brake actuator (15) to set the second engagement member (11) in the parking brake position (P); and
- discontinue energizing the electric brake motor (300) and parking brake actuator (15) while the second engagement member (11) remains in the parking brake position (P) by its mechanical engagement with the first engagement member (7) to prevent the central transmission gear (3) from rotating in the brake deactivating direction.

13. A vehicle comprising the electric brake system (100) according any of claims 1-11 and/or a control system (100c) configured to perform the method of claim 12.

14. The vehicle according to claim 13, wherein the parking brake actuator (15) is part of, or operationally connected to, a parking brake controller operable from inside a cabin of the vehicle.

## Patentansprüche

1. Elektrisches Bremssystem (100) zum Bremsen eines Kraftfahrzeugs, wobei das System (100) aufweist
- ein zentrales Getriebe (3), das dazu eingerichtet ist, um eine Achse (A) zu rotieren, um mechanische Energie zwischen einem elektrischen Bremsmotor (300) und einem Bremsaktivierungsmechanismus (200) zu übertragen, um das Bremsen eines Kraftfahrzeugs durch Rotieren des zentralen Getriebes (3) in eine Bremsaktivierungsrichtung (B) bzw. eine Bremsdeaktivierungsrichtung (C) zu aktivieren oder zu deaktivieren;
- ein erstes Eingriffselement (7), das mechanisch an das zentrale Getriebe (3) angebracht oder mit diesem integriert ist, um mit dem zentralen Getriebe (3) um die Achse (A) zu rotieren;
- ein zweites Eingriffselement (11), das dazu eingerichtet ist, um mit dem ersten Eingriffselement (7) selektiv in Eingriff zu kommen oder von diesem gelöst zu werden, abhängig von einer Position des zweiten Eingriffselements (11) entlang der Achse (A);
- einen Parkbremsaktuator (15), der dazu eingerichtet ist, das zweite Eingriffselement (11) entlang der Achse (A) zu bewegen, um die Position des zweiten Eingriffselements (11) zwischen einer Servicebremsposition (S) und einer Parkbremsposition (P) zu wechseln, wobei
o in der Servicebremsposition (S) die ersten und zweiten Eingriffselemente (7, 11) mechanisch gelöst sind und das zentrale Getriebe (3) frei ist, um unabhängig vom zweiten Eingriffselement (11) zu rotieren, um die mechanische Energie frei zwischen dem elektrischen Bremsmotor (300) und dem Bremsaktivierungsmechanismus (200) zu übertragen; und **dadurch gekennzeichnet, dass**
o in der Parkbremsposition (P) die ersten und zweiten Eingriffselemente (7, 11) mechanisch ein Eingriff stehen, um das zentrale Getriebe (3) daran zu hindern, in der Bremsdeaktivierungsrichtung zu rotieren und gleichzeitig die Rotation des Getriebes (3) in die Bremsaktivierungsrichtung zu erlauben.

2. System nach Anspruch 1, wobei der mechanische Eingriff zwischen dem ersten und zweiten Eingriffselement (7, 11) dazu eingerichtet ist, dem zentralen Getriebe (3) zu erlauben, ausschließlich in die Bremsaktivierungsrichtung zu rotieren, wenn das zweite Eingriffselement (11) sich in der Parkbremsposition (P) befindet.

3. System nach einem der vorhergehenden Ansprüche, wobei das erste Eingriffselement und das zweite Eingriffselement jeweils eine Reihe von Zähnen aufweisen, wobei die Reihen von Zähnen so geformt sind, dass sie miteinander in Eingriff stehen, um zu verhindern, dass das zentrale Getriebe (3) zumindest in die Bremsdeaktivierungsrichtung (C) rotiert.

4. System nach Anspruch 3, wobei mindestens einige der Zähne eine jeweilige Neigung an einer Seite aufweisen, wobei die Neigung der Zähne teilweise einem jeweiligen gegenüberliegenden Eingriffselement zugewandt ist, damit das zweite Eingriffselement (11) von der Neigung vom ersten Eingriffselement (7) weggedrückt wird, wenn das zentrale Getriebe (3) in die Bremsaktivierungsrichtung (B) rotiert wird.

5. System nach Anspruch 4, aufweisend einen elastischen Mechanismus, wobei das erste Eingriffselement (7) mit dem elastischen Mechanismus verbunden ist, wobei der elastische Mechanismus so konfiguriert ist, dass er das erste Eingriffselement (7) zurück zum zweiten Eingriffselement (11) drückt oder zieht, nachdem er zunächst von der Neigung der Zähne auseinandergedrückt wurde.

6. System nach einem der Ansprüche 3 bis 5, wobei die Formen der ineinandergreifenden Zähne an einer gegenüberliegenden Seite der Neigung so konfiguriert sind, dass sie das erste und zweite Eingriffselement (7, 11) zusammenhalten, wenn auf das zentrale Getriebe (3) eine Kraft wirkt, damit es in der Bremsaktivierungsrichtung rotiert, während das zweite Eingriffselement (11) sich in der Parkbremsposition (P) befindet.

7. System nach einem der vorhergehenden Ansprüche, wobei das elektrische Bremssystem (100) so konfiguriert ist, dass es eine Position des zweiten Eingriffselements (11) in zumindest der Parkbremsposition (P) stabil hält, ohne elektrischen Strom auf dem elektrischen Bremssystem durch das mechanische Eingreifen des ersten und des zweiten Eingriffselements (7, 11).

8. System nach einem der vorhergehenden Ansprüche, wobei ein kombinierter Mechanismus des Parkbremsaktuators (15) und des zweiten Eingriffselements (11) bistabil ist und eine Position des zweiten Eingriffselements (11) in entweder der Parkbremsposition (P) oder der Servicebremsposition (S) hält, ohne elektrischen Strom auf dem elektrischen Bremssystem.

9. System nach einem der vorhergehenden Ansprüche, wobei das zweite Eingriffselement (11) als eine Hülse auf einer zentralen Achse (5), die sich entlang der Achse (A) erstreckt, angeordnet ist, wobei das zweite Eingriffselement (11) konfiguriert ist, um entlang der zentralen Achse (5) zwischen der Servicebremsposition (S) und der Parkbremsposition (P) zu gleiten.

10. System nach Anspruch 9, wobei das als Hülse geformte zweite Eingriffselement (11) innere Zähne (12) an einer Innenseite der Hülsenform aufweist und die zentrale Achse (5) äußere Zähne (14) aufweist, um in die inneren Zähne des zweiten Eingriffselements (11) einzugreifen, wobei die Zähne sich in einer Richtung entlang der Achse (A) erstrecken, damit das zweite Eingriffselement (11) entlang der zentralen Achse (5) gleiten kann, während eine Rotation des zweiten Eingriffselements (11) in Bezug auf die zentrale Achse (5) verhindert wird.

11. System (100) nach einem der vorhergehenden Ansprüche, aufweisend einen integrierten Bremsmechanismus (200) und elektrischen Bremsmotor (300), wobei der Bremsmotor (300) angeordnet ist, um den Bremsmechanismus über das zentrale Getriebe (3) des Parkbremssystems (100) zu aktivieren.

12. Verfahren zum Parken eines Kraftfahrzeugs mittels des elektrischen Bremssystems (100) nach einem der vorhergehenden Ansprüche, wobei das Verfahren aufweist
- Zuführen von Energie an den elektrischen Bremsmotor (300), um den Bremsaktivierungsmechanismus (200) über Reihen von Getrieben einschließlich des zentralen Getriebes (3) mechanisch zu aktivieren vor und/oder während des Zuführens von Energie an den Parkbremsaktuator (15), um das zweite Eingriffselement (11) in die Parkbremsposition (P) zu bringen; und
- Stoppen des Zuführens von Energie an den elektrischen Bremsmotor (300) und Parkbremsaktuator (15), während das zweite Eingriffselement (11) durch seinen mechanischen Eingriff mit dem ersten Eingriffselement (7) in der Parkbremsposition (P) bleibt, um zu verhindern, dass das zentrale Getriebe (3) in die Bremsdeaktivierungsrichtung rotiert.

13. Kraftfahrzeug aufweisend das elektrische Bremssystem (100) nach einem der Ansprüche 1 bis 11 und/oder ein Steuerungssystem (100c), das dazu eingerichtet ist, das Verfahren nach Anspruch 12 durchzuführen.

14. Kraftfahrzeug nach Anspruch 13, wobei der Parkbremsaktuator (15) Teil des oder operativ verbunden ist mit einer Parkbremssteuerung, die vom Innenraum eines Fahrzeugs aus betrieben werden kann.

## Revendications

1. Système de frein électrique (100) pour le freinage d'un véhicule, le système (100) comprenant
- un engrenage de transmission central (3) configuré pour tourner autour d'un axe (A) pour transmettre une énergie mécanique entre un moteur de frein électrique (300) et un mécanisme d'actionnement de frein (200) pour activer ou désactiver un freinage du véhicule par la rotation de l'engrenage de transmission central (3) respectivement dans une direction d'activation de frein (B) ou dans une direction de désactivation de frein (C) ;
- un premier organe d'engagement (7) fixé mécaniquement à l'engrenage de transmission central (3) ou solidaire de celui-ci pour tourner avec l'engrenage de transmission central (3) autour de l'axe (A) ;
- un deuxième organe d'engagement (11) configuré pour sélectivement engager ou désengager le premier organe d'engagement (7) en fonction d'une position du deuxième organe d'engagement (11) le long de l'axe (A) ;
- un actionneur de frein de stationnement (15) configuré pour déplacer le deuxième organe d'engagement (11) le long de l'axe (A) pour commuter la position du deuxième organe d'engagement (11) entre une position de frein de service (S) et une position de frein de stationnement (P), dans lequel
o à la position de frein de service (S), les premier et deuxième organes d'engagement (7, 11) sont mécaniquement désengagés, et l'engrenage de transmission central (3) est libre de tourner indépendamment du deuxième organe d'engagement (11) pour transmettre librement l'énergie mécanique entre le moteur de frein électrique (300) et le mécanisme d'actionnement de frein (200) ; et **caractérisé en ce que**
o à la position de frein de stationnement (P), les premier et deuxième organes d'engagement (7, 11) sont engagés mécaniquement pour empêcher l'engrenage de transmission central (3) de tourner dans la direction de désactivation de frein tout en permettant une rotation de l'engrenage de transmission central (3) dans la direction d'activation de frein.

2. Système selon la revendication 1, dans lequel l'engagement mécanique entre les premier et deuxième organes d'engagement (7, 11) est configuré pour permettre à l'engrenage de transmission central (3) de tourner exclusivement dans la direction d'activation de frein lorsque le deuxième organe d'engagement (11) est à la position de frein de stationnement (P).

3. Système selon l'une quelconque des revendications précédentes, dans lequel le premier organe d'engagement et le deuxième organe d'engagement comprennent chacun un ensemble de dents, dans lequel les ensembles de dents sont façonnés pour s'emboîter mutuellement pour empêcher l'engrenage de transmission central (3) de tourner au moins dans la direction de désactivation de frein (C).

4. Système selon la revendication 3, dans lequel au moins certaines des dents comprennent une pente respective sur un côté, dans lequel la pente des dents fait partiellement face à un organe d'engagement opposé respectif pour amener le deuxième organe d'engagement (11) à être repoussé par la pente du premier organe d'engagement (7) lorsque l'engrenage de transmission central (3) est tourné dans la direction d'activation de frein (B).

5. Système selon la revendication 4, comprenant un mécanisme élastique, dans lequel le premier organe d'engagement (7) est relié au mécanisme élastique, dans lequel le mécanisme élastique est configuré pour pousser ou tirer le premier organe d'engagement (7) à nouveau vers le deuxième organe d'engagement (11) après avoir été initialement repoussé par la pente des dents.

6. Système selon l'une quelconque des revendications 3 à 5, dans lequel les formes des dents d'emboîtement sur un côté opposé de la pente sont configurées pour maintenir les premier et deuxième organes d'engagement (7, 11) solidaires lorsque l'engrenage de transmission central (3) subit une force pour tourner dans la direction de désactivation de frein pendant que le deuxième organe d'engagement (11) est à la position de frein de stationnement (P).

7. Système selon l'une quelconque des revendications précédentes, dans lequel le système de frein électrique (100) est configuré pour maintenir de manière stable une position du deuxième organe d'engagement (11) à au moins la position de frein de stationnement (P) en l'absence de puissance électrique sur le système de frein électrique par l'engagement mécanique des premier et deuxième organes d'engagement (7, 11).

8. Système selon l'une quelconque des revendications précédentes, dans lequel un mécanisme combiné de l'actionneur de frein de stationnement (15) et du deuxième organe d'engagement (11) est bistable, en maintenant une position du deuxième organe d'engagement (11) à la position de frein de stationnement (P) ou à la position de frein de service (S) en l'absence de puissance électrique sur le système de frein électrique.

9. Système selon l'une quelconque des revendications précédentes, dans lequel le deuxième organe d'engagement (11) est agencé en tant qu'un manchon sur un essieu central (5) s'étendant le long de l'axe (A), dans lequel le deuxième organe d'engagement (11) est configuré pour coulisser le long de l'essieu central (5) entre la position de frein de service (S) et la position de frein de stationnement (P).

10. Système selon la revendication 9, dans lequel le deuxième organe d'engagement (11) en forme de manchon comprend une denture intérieure (12) sur un intérieur de la forme de manchon et l'essieu central (5) comprend une denture extérieure (14) pour s'engager avec la denture intérieure du deuxième organe d'engagement (11), dans lequel la denture s'étend dans une direction le long de l'axe (A) pour permettre au deuxième organe d'engagement (11) de coulisser le long de l'essieu central (5) tout en empêchant toute rotation du deuxième organe d'engagement (11) par rapport à l'essieu central (5).

11. Système (100) selon l'une quelconque des revendications précédentes, comprenant un mécanisme de frein intégré (200) et un moteur de frein électrique (300), dans lequel le moteur de frein (300) est agencé pour actionner le mécanisme de frein via l'engrenage de transmission central (3) du système de frein de stationnement (100).

12. Procédé de stationnement d'un véhicule en utilisant le système de frein électrique (100) selon l'une quelconque des revendications précédentes, le procédé comprenant
- la mise sous tension du moteur de frein électrique (300) pour actionner mécaniquement le mécanisme d'actionnement de frein (200) via un ensemble d'engrenages comportant l'engrenage de transmission central (3) avant et/ou pendant la mise sous tension de l'actionneur de frein de stationnement (15) pour mettre le deuxième organe d'engagement (11) à la position de frein de stationnement (P) ; et
- la terminaison de la mise sous tension du moteur de frein électrique (300) et de l'actionneur de frein de stationnement (15) pendant que le deuxième organe d'engagement (11) reste à la position de frein de stationnement (P) par son engagement mécanique avec le premier organe d'engagement (7) pour empêcher l'engrenage de transmission central (3) de tourner dans la direction de désactivation de frein.

13. Véhicule comprenant le système de frein électrique (100) selon l'une quelconque des revendications 1 à 11 et/ou un système de commande (100c) configuré pour réaliser le procédé selon la revendication 12.

14. Véhicule selon la revendication 13, dans lequel l'actionneur de frein de stationnement (15) fait partie de, ou est relié fonctionnellement à, un dispositif de commande de frein de stationnement utilisable depuis un intérieur d'une cabine du véhicule.
